# EUROPEAN PATENT SPECIFICATION

(11) **EP 3 468 702 B1**
(45) Date of publication and mention of the grant of the patent: **11.10.2023**
(21) Application number: 17730550.5
(22) Date of filing: 08.06.2017
(51) Int. Cl.: B01F 27/053, B01F 27/07, B01F 27/091, B01F 27/807, B01F 35/22, B01F 35/33, B01F 35/53, A47J 43/07, A47J 43/28

(54) **DETACHABLE RIB, FOOD MIXING CHAMBER COMPRISING TWO OR MORE RIBS AND STIR TOOL FOR A MIXING BOWL**
LEBENSMITTELMISCHKAMMER MIT ZWEI ODER MEHR ABNEHMBAREN RIPPEN UND RÜHRWERKZEUG FÜR EINEN MISCHBECHER
AILETTE AMOVIBLE ET OUTIL DE MELANGE POUR BOL MELANGEUR

(30) Priority: 08.06.2016 GB 201610001
(43) Date of publication of application: 17.04.2019
(60) Divisional application: 19203677.0
(73) Proprietor: Kenwood Limited, Havant, Hampshire PO9 2NH (GB)
(72) Inventor: WILLIAMS, David, Havant Hampshire PO9 2NH (GB); JOHNS, Martin, Havant Hampshire PO9 2NH (GB); PALMER, Andrew, Havant Hampshire PO9 2NH (GB)
(74) Representative: Hector, Annabel Mary
(86) International application number: PCT/GB2017/051672
(87) International publication number: WO 2017/212281

(56) References cited:
- EP-A1- 2 820 984
- EP-A2- 0 167 317
- WO-A1-2013/016533
- GB-A- 1 338 559
- JP-A- S5 288 860
- US-A1- 2005 122 837
- US-A1- 2011 185 917

## Description

The present invention relates to a detachable rib and stir tool for use in a mixing bowl. More particularly, the present invention relates to a detachable rib that provides an obstacle for ingredients being driven around the inside of a mixing bowl and a stir tool with an adjustable extension.

### Background

Food processors are known which consist of a driveshaft that can be used to drive an interchangeable tool in a rotary motion. Different tools are available to provide different functions; for example whisking, chopping, stirring, mixing etc. The processor may be arranged to heat or cool ingredients in a bowl, or just mix them with no heating or cooling applied.

A commonly used tool is one which stirs ingredients within the enclosure. When heat or cooling is applied to the enclosure in order to cook or cool the ingredients it is desirable to generate motion amongst the ingredients in order to distribute the heat or coolness evenly and ensure uniform cooking or cooling. This stirring is commonly achieved by the use of a stirring tool with a stirring arm which is driven around the enclosure in a circular or planetary motion. This design of stir tool is generally effective at preventing ingredients from burning or freezing and sticking to the base of the enclosure.

The stirring tool can be driven from above, as in the case of stand mixers, or below, as in the case of food processors.

While being stirred in this way, ingredients often collect at the outermost edge of the stirring arm due to the centrifugal force of them being driven in rotational motion. The ingredients are collected as one mass at this edge and driven around the enclosure without being turned over, resulting in uneven cooking or cooling.

Moreover, whilst stir tools are often effective at scraping the bottom of a single container, where the container is replaced with another where the distance from the bottom of the container to the point of attachment of the tool is different, they cannot be easily adapted to this differing height.

It has been proposed to provide a tool which is sprung so that it is urged to touch the base of the bowl, but such tools have been found to lack robustness for stirring large quantities of food.

US 2011/0185917 relates to an appliance having a receptacle with a blade which includes a turnover means. EP2820984 shows a cooking utensil having at least one oblique protrusion/groove on the inside surface of the side wall. JPS5288860 is a kneading machine with a rotatable resistor along an inner wall of a hopper. US 2005/122837 shows a blender jar with inwardly extending ribs to enhance blending. WO2013/016533 is a blender system with a rotatable blade assembly including cutting blades and crushing blades. GB 1338559 relates to a dough mixing container having a mixing plate and one or more formers fixed to the inside wall. EP 0167317 shows a slurry mixer having an agitator and stationary baffles on the wall of the chamber.

### Statements of Invention

The present invention seeks to provide an obstacle, in the form of a detachable rib, to interrupt the path of ingredients being driven around a mixing bowl, thereby allowing ingredients to be more thoroughly mixed.

According to a first aspect of the present invention, there is provided a mixing bowl for food having an integral handle and a detachable rib, the rib comprising; an elongate body portion comprising a blade configured to extending into the mixing bowl along an inner surface thereof; and at least one attachment formation for engaging with a corresponding formation of the mixing bowl, the engagement securing the rib against circumferential movement in at least one rotational direction; such that in use the blade is arranged to interrupt a path of food being driven around the mixing bowl in the at least one rotational direction, wherein the at least one attachment formation is arranged to engage with the handle of the mixing bowl. Thus the rib may provide an obstacle to ingredients being driven around the mixing bowl by a mixing tool, resulting in a better mixing of ingredients that build up around the edge of the mixing bowl.

The blade may extend in a substantially axial direction along an inner surface of the mixing bowl, to a portion or location proximal to the base of the bowl.

Optionally, the attachment formation is arranged to secure the rib against rotation in both rotational directions, so that ingredients in the mixing bowl may be driven around the mixing bowl in either direction without detaching the rib.

The attachment formation is conveniently provided at one end of the blade, and is arranged to engage with the corresponding formation at or adjacent to a mixing bowl rim. Optionally, the blade is connected to the at least one attachment formation by a connecting element arranged to extend over the rim of the bowl. This allows the attachment formation to be located on the outside of the mixing bowl, for convenience.

The attachment formation is arranged to engage with a handle of the mixing bowl. The handle of the mixing bowl provides a convenient and secure attachment point for the detachable rib.

The attachment formation may comprise a pair of clips, each of which is suitable for being secured against a leg of the handle of the mixing bowl.

Alternatively, the attachment formation comprises and/or is arranged to engage with at least one of: a clamp; a screw; a fixing post; and a magnet.

One elongate edge of the blade may comprise a thick edge so as to present a bluff face so as to disrupt the path of ingredients being mixed.

The bluff face may be shaped to protrude into the mixing bowl a distance of between about 3mm and 15mm, preferably between about 7mm and 11mm, more preferably about 9mm, when engaged with the mixing bowl.

The bluff face may be angled between about 50 and 130 degrees, preferably about 90 degrees, to the surface of the mixing bowl when engaged with the mixing bowl.

Optionally, the bluff face of the rib has a curved profile at a lower end thereof which can act to direct ingredients driven around the mixing bowl near the bottom of the blade downward under the blade.

The blade preferably comprises a streamlined face extending from a thin elongate edge.

Optionally, the streamlined face is curved, and may be angled at an angle of less than about 45 degrees, preferably between about 5 and 30 degrees, to the surface of the mixing bowl when engaged with the mixing bowl, to provide strength to the blade when resisting the force of ingredients being driven against it.

Optionally, the blade is at least partially over moulded with a flexible seal, such that the flexible seal forms a seal between the blade and the mixing bowl when engaged with the mixing bowl in order to help prevent food from becoming trapped between the blade and the bowl.

Optionally, the blade is manufactured from a food safe material, preferably wherein the food safe material comprises at least one of: fibreglass; nylon; injection-moulded plastic; or stainless steel so that it may be used in the mixing of ingredients for food.

Optionally, the blade comprises a heat resistant material so that it may be used in heated mixing bowls.

Where the rib is used in the bowl of an appliance such as a food mixer, the blade may be shaped to conform to the shape of a mixing tool of the appliance so as to maintain a substantially constant clearance from the mixing tool along its length.

The detachable rib may further comprise an elongate reinforcing member, such as an elongate reinforcing column to provide additional strength to the blade.

Optionally, the detachable rib may comprise a communication element to communicate the presence of the detachable rib in the mixing bowl to a kitchen appliance associated with the mixing bowl. Optionally, the communication element comprises at least one of: an RFID tag; a magnetic element; a reed switch; and a NFC tag. This allows for the use of the detachable rib in smart or electronic kitchen appliances.

Optionally, the attachment formation is connected to the elongate body portion by a connecting strip arranged to extend over a rim of the bowl, and preferably wherein the connecting strip has a thickness of 2mm or less, and more preferably 1mm or less. This allows a lid for the mixing bowl to be used when the detachable rib is present.

The food mixing chamber optionally comprising two or more ribs, each rib comprising; an elongate body portion comprising a blade configured to extend into the chamber along or adjacent an inner surface thereof, the blade having a first elongate edge comprising a thick edge so as to present a bluff face, and a second elongate edge comprising a thin edge, with a streamlined face extending between the elongate edges, wherein the bluff faces of at least two of the two or more ribs face in opposing directions in relation to food being stirred in the chamber. This allows pre-formed ribs within the mixing bowl to provide an obstacle to ingredients being mixed in either rotational direction within the mixing bowl.

The invention also provides a kitchen appliance having a bowl and a detachable rib as defined above.

### Summary of the Figures

Embodiments of the present invention will now be described, by way of example only and with reference to the accompanying drawings having like-reference numerals, in which:
Figure 1 illustrates an embodiment of a detachable rib;
Figure 2 illustrates an embodiment of a detachable rib;
Figure 3 illustrates a clip arrangement for the detachable rib in further detail;
Figure 4 illustrates the detachable rib fixed to a mixing bowl;
Figure 5 illustrates a close up view of the detachable rib fixed to a mixing bowl;
Figure 6 illustrates a side view of the detachable rib fixed to a mixing bowl;
Figure 7 illustrates a rear view of the detachable rib fixed to a mixing bowl;
Figure 8 illustrates a top view of the detachable fixed to a mixing bowl;
Figure 9 illustrates a perspective view of the detachable rib fixed to a mixing bowl;
Figure 10 illustrates an example of the detachable rib in use;
Figure 11 illustrates a step-by-step example of the detachable rib in use;
Figure 12 illustrates a front view of a further embodiment of the detachable rib;
Figure 13 illustrates a perspective view of a further embodiment of the detachable rib;
Figure 14 illustrates the further embodiment of the detachable rib fixed to a mixing bowl;
Figure 15 illustrates a rear view the further embodiment of the detachable rib fixed to a mixing bowl;
Figure 16 illustrates the further embodiment of the detachable rib in use within a mixing bowl;
Figure 17 illustrates a perspective view of an embodiment of a stir tool;
Figure 18 illustrates a detailed perspective view of a height-adjustment mechanism for the stir tool;
Figure 19 illustrates a top-down view of the stir tool;
Figure 20 illustrates a drive outlet to which the stir tool may be attached;
Figure 21 illustrates a food processor with the stir tool attached;
Figure 22 is a perspective view from one side of a stir tool according to another embodiment; and
Figure 23 is a perspective view from another side of the stir tool of Figure 22.

### Detailed description

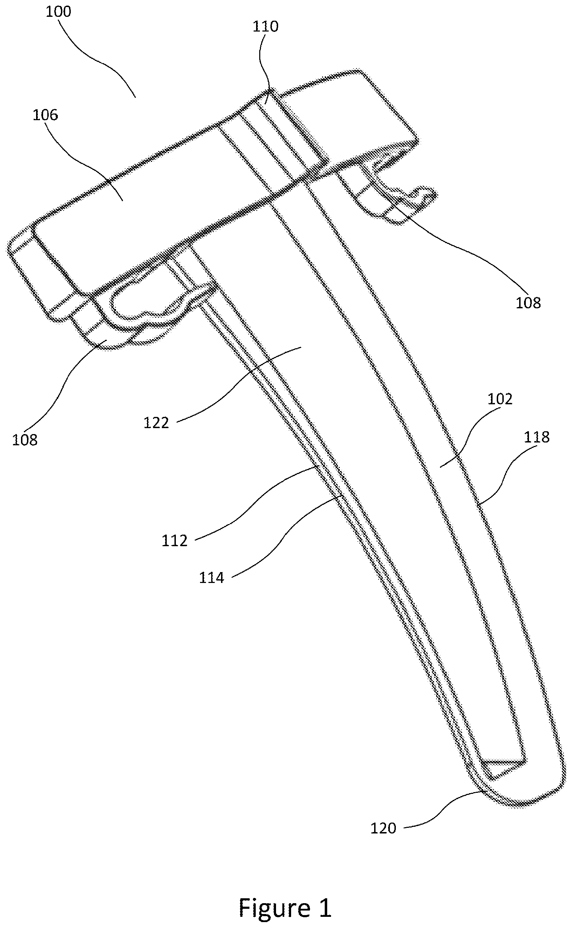

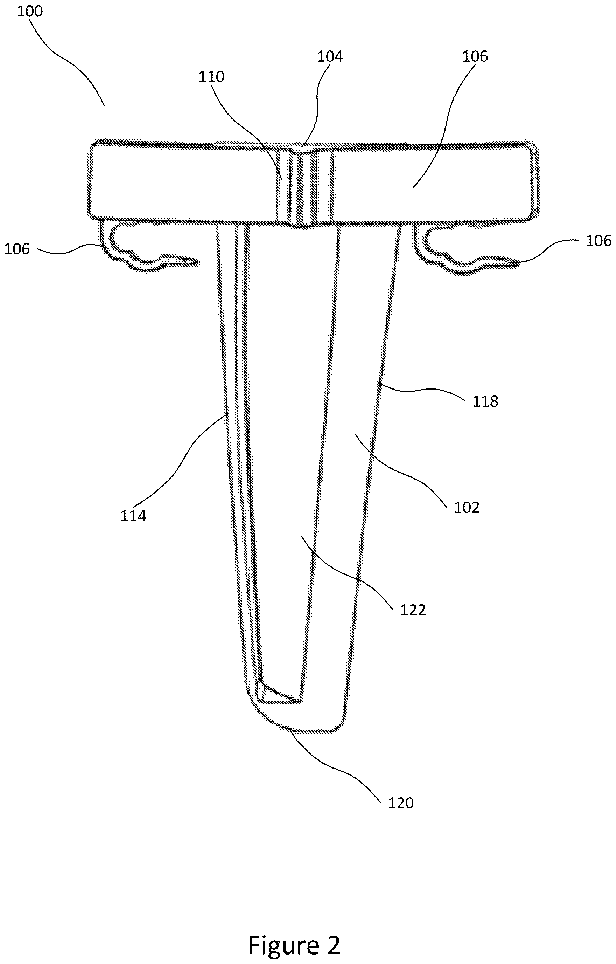

Referring to Figures 1 and 2, an exemplary embodiment of a detachable rib for a mixing bowl will now be described.

A detachable rib 1 00 is provided for use in a mixing bowl. The mixing bowl may form part of a kitchen appliance in which a stir or scraping tool is driven in rotational motion to stir or mix ingredients in the bowl, such as a stand mixer or food processor.

The detachable rib comprises an elongate body portion, comprising an elongate blade 102, descending from a connecting strip 104. The connecting strip 104 connects the elongate blade 1 02 to a clip support 106, from which two clips 108 descend. The clip support also comprises a clip grip 110.

The elongate blade 102 comprises a thick elongate edge, which presents a bluff face 112. The bluff face 112 forms an angle of at between about 50 degrees to 140 degrees to the side wall of the mixing bowl when in use, preferably approximately 90 degrees. The bluff face 112 may be straight or be curved along at least a portion of its length. The rear edge 114 of the bluff face 112 is shaped to conform to the inner bowl profile of the mixing bowl such that, when in use, the rear edge 114 is closely adjacent to the inner bowl surface, leaving little or no gap into which ingredients could become trapped.

A streamlined face 116 extends from the top of the bluff face 112 of the thick edge to a thin elongate edge 118 that runs along the opposite edge of the elongate blade 102 to the thick edge. The streamlined face 116 forms a shallow slope with an angle of less than approximately 45 degrees to the to the side wall of the mixing bowl when in use, preferably between 5 and 30 degrees. The streamlined face 116 can be straight or curved along at least a portion of its length, and can connect the elongate blade 102 substantially smoothly to the inner surface of the mixing bowl when in use. This allows the elongate blade 102 to be relatively strong in resisting forces applied to the detachable rib 100 by a stir tool in the mixing bowl, meaning it will not bend along its length. This shallow angle is also particularly advantageous in that it allows food to tumble along, and be rubbed against, the streamlined face 116 under the influence of the stir tool during processing, thus enhancing mixing and processing.

The blade 102 terminates in a rounded end 120 at its furthermost edge from the clip arrangement.

The back of the elongate blade 102 comprises an elongate supporting member 122, which extends along a portion of the elongate blade 102 to provide additional strengthening and to support the blade against an inner bowl surface when in use.

The elongate blade 102, or a portion of thereof, can be over moulded with a flexible seal, such as one made of plastic or rubber. The flexible seal can act to seal any gap between the mixing bowl and the elongate blade 102 when the detachable rib 100 is in use. This prevents the ingress of food between the elongate blade 102 and the inner surface of the mixing bowl when in use.

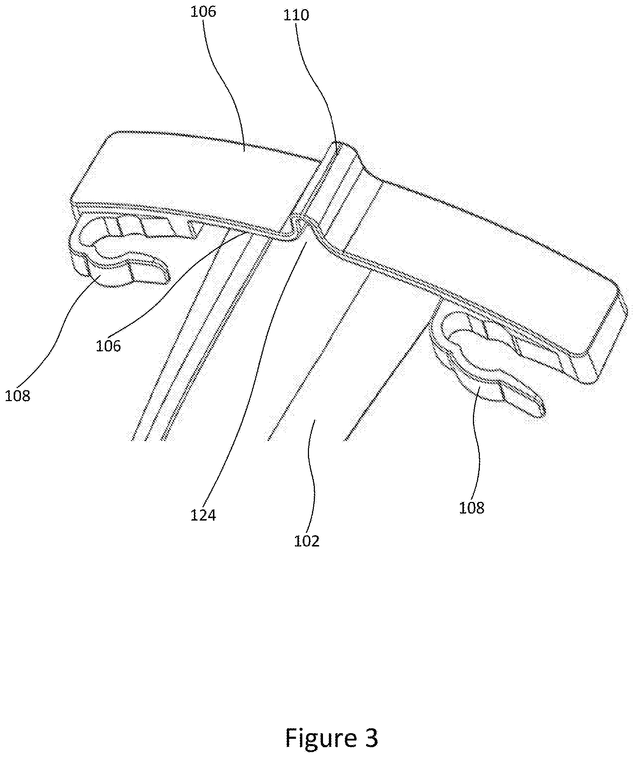

Figure 3 illustrates the clip arrangement of the detachable rib in further detail. The clip arrangement comprises a clip support 106 having an inner surface 124 with substantially the same curvature as the outside of the lip of a mixing bowl. The clips 108 provide an attachment formation which engages with a corresponding formation on the mixing bowl, in this case a mixing bowl handle. The detachable rib may thus be attached and detached to the mixing bowl, allowing use of the same mixing bowl for different tasks.

The clip arrangement further comprises two clips 108 that descend from the clip support 106. The two clips 108 are aligned such that the clips 108 are oriented in the same direction, by which it is meant that the clips are open on the same side. The two clips 108 serve to secure the detachable rib 100 to a mixing bowl by clipping onto the handle of the mixing bowl. Engaging with the mixing bowl handle in this way secures the detachable rib 100 against circumferential movement in one rotational direction.

A clip grip 110 protrudes from the centre of the clip support. The clip grip 110 can be used to facilitate the attachment and detachment of the detachable rib 100 to the handle of the mixing bowl. The clip grip can be an integral part of the clip support 106, or may alternatively be a separate part attached to the clip support 106. In this embodiment the clip grip 110 is integrally formed with the clip support 106, and comprises a protruding fold in the material of the clip support 106.

The connecting strip 104 (not visible in Figure 3) joins the elongate blade to the clip support 106. The connecting strip 104 extends from the top of the central portion of the clip support 106 to the top of the elongate blade, leaving a cavity 126 between the inner surface 124 of the clip support 106 and the upper part of the back of the elongate blade 102.

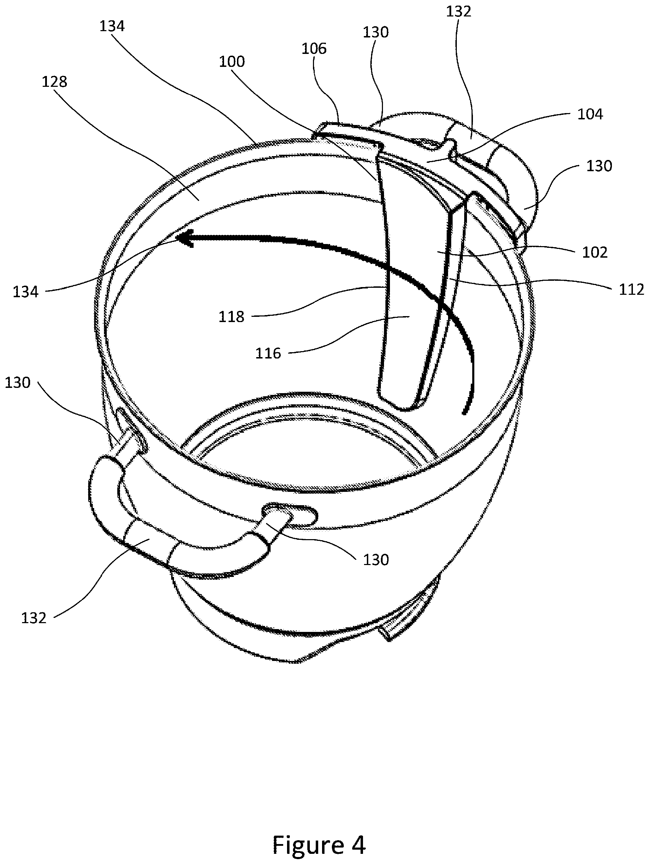

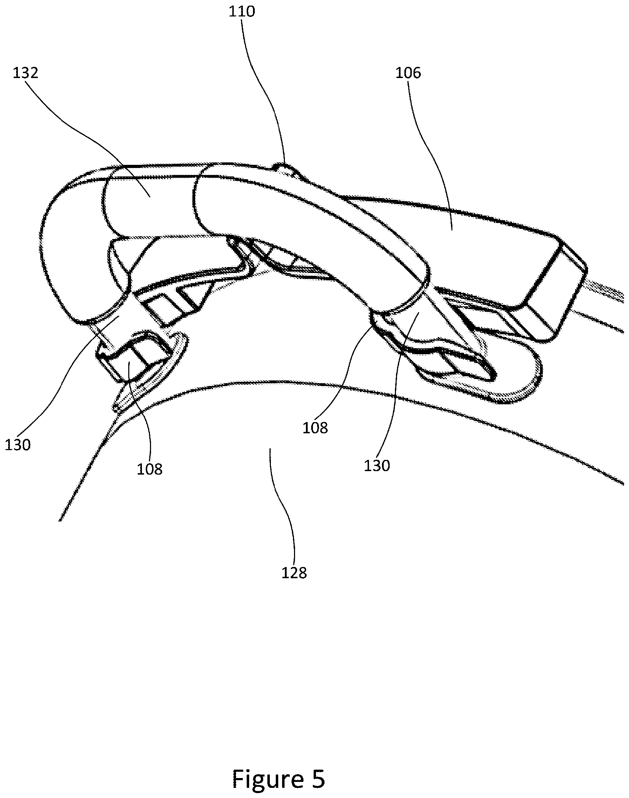

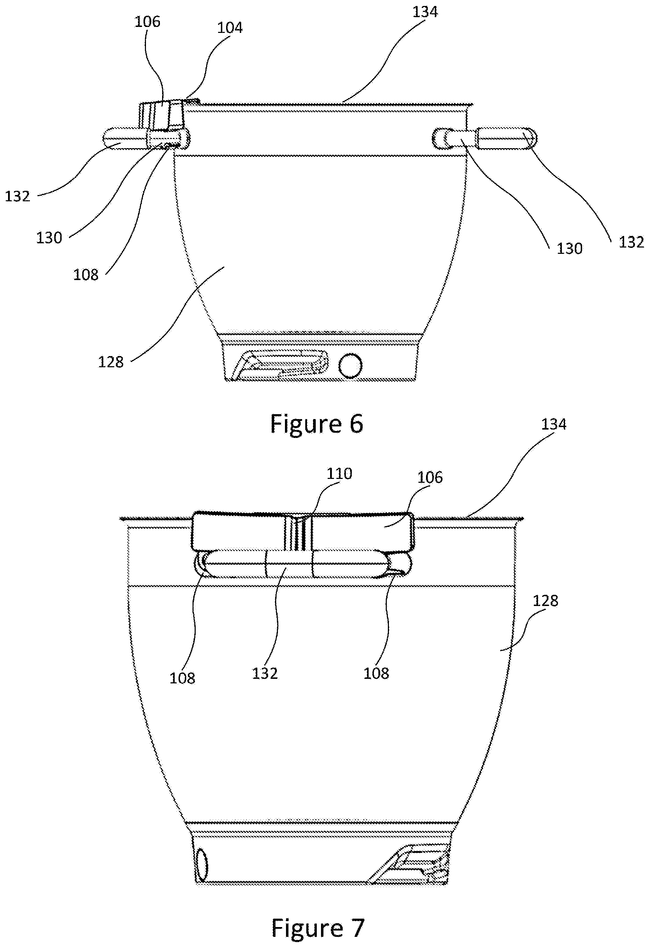

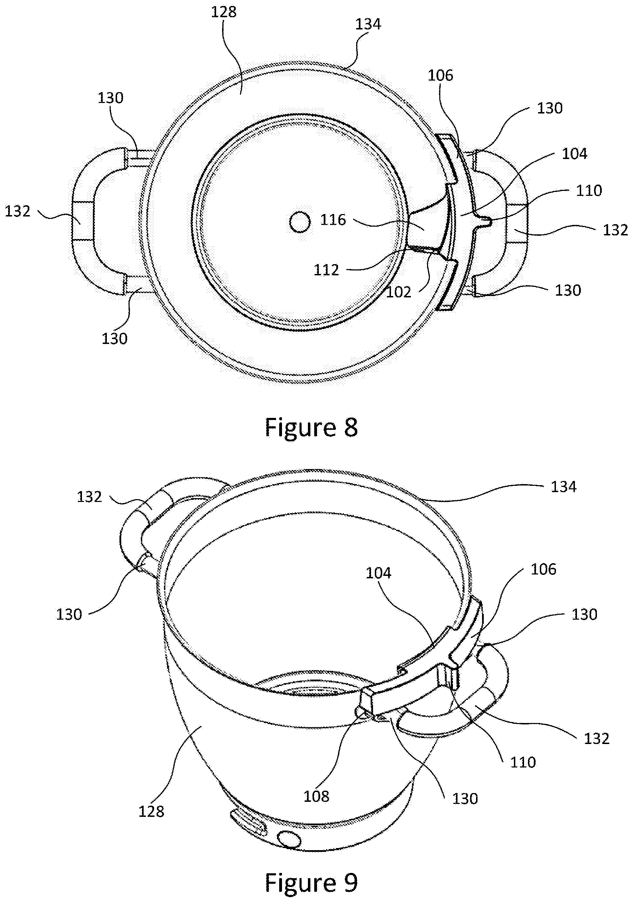

Figures 4 to 9 illustrate the detachable rib fixed to a mixing bowl. The detachable rib 100 is secured to a mixing bowl 128 by means of the clips 108 that descend from the clip support 106. Each of the clips 108 is clipped onto one of the legs 130 of the mixing bowl handle 132, preferably to the exposed metal rather than over an over moulded plastic grip, if present. The clips 108 secure the detachable rib 100 to the mixing bowl handle 132 against the direction of rotation 134 of a mixing tool within the mixing bowl 128, shown by the arrow in Figure 4, preventing the motion of the mixing tool from detaching the detachable rib 100 from the mixing bowl handle 132. The clips 108 secure the rib against circumferential movement in the rotational direction of the mixing tool within the mixing bowl 128. The clip grip 110 facilitates the detachment of the detachable rib 100 from the mixing bowl 128 by providing a convenient grip for a user. The user pushes the clip grip 110 in the opposite direction to that in which ingredients are driven in the bowl (i.e. in the opposite direction to the arrow in Figure 4) in order to detach the clips from the legs 130 of the mixing bowl handle 132.

The elongate body comprising the elongate blade 102 descends into the mixing bowl 128 from the connecting strip 104, and extends downwards along a substantial portion of the inner bowl surface. The elongate blade 102 is arranged to extend in a substantially axial direction along an inner surface of the mixing bowl 128. The bluff face 112 formed by the thick elongate edge is, in this embodiment, presented to the direction from which ingredients are driven by the mixing tool, forming an obstacle to the path of the ingredients. The streamlined face 116 provides a shallow slope down which ingredients can tumble, thus enhancing mixing, when being driven by the stir tool, and substantially smoothly joins the elongate blade 102 to the inner surface of the mixing bowl 128 at the thin elongate edge 118 of the elongate blade 102.

The connecting strip 104 extends over the rim 134 of the mixing bowl 128, connecting the elongate body comprising the elongate blade 102 to the clip support 106. The elongate blade 102 descends into the mixing bowl 128 from the connecting strip 104, and the clip support 106 descends from the connecting strip 104 on the outside of the mixing bowl 128. In the embodiment shown, the connecting strip 104 attaches the whole width of the top of the elongate blade 102 to a portion of the clip support 106. The connecting strip 104 can be made sufficiently thin such that a lid of the mixing bowl 128 can be used without substantial interference by the detachable rib 100. For example, the connecting strip may be 2mm or less thick, and more preferably approximately 1mm or less thick.

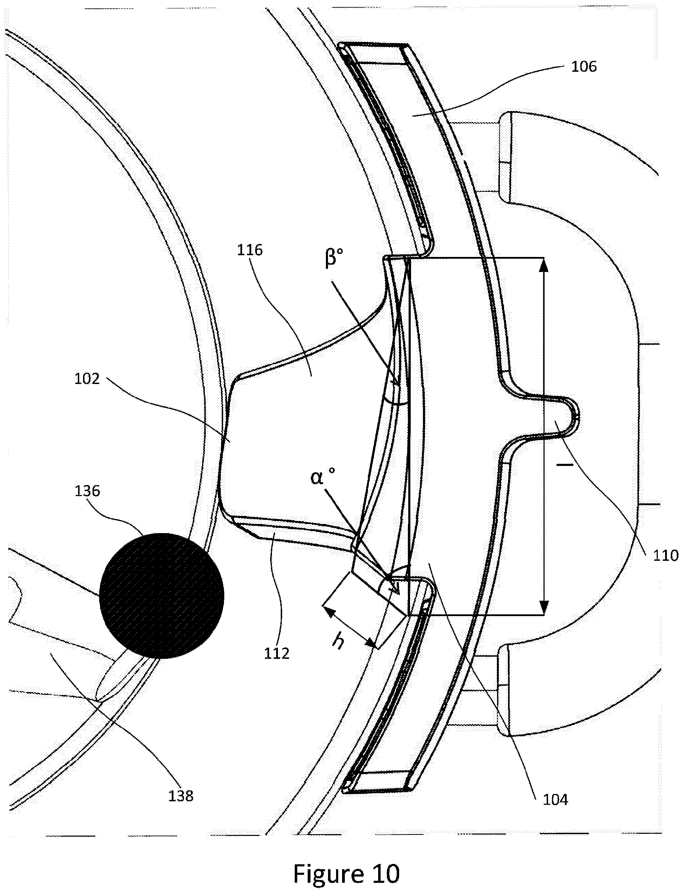

Figure 10 illustrates an example of the detachable rib in use. Ingredients 136 are driven around the inside of the mixing bowl 128 by a stir tool 138. The centrifugal force of this motion causes the ingredients 136 to move radially outwards along the stir tool 138 and build up at the edge of the mixing bowl 128. Furthermore, stir tools 136 often have an angled blade or scraper presented to the ingredients 136 in the mixing bowl which pushes the ingredients around the mixing bowl. The angled nature of the blade inhibits the ingredients 136 from falling over the trailing edge of the blade, thereby causing the ingredients 136 to build up in a mass at the outermost edge of the blade. This prevents the ingredients 136 from being effectively mixed.

In the embodiment shown, the bluff face 112 of the elongate blade 102 provides an obstacle to the path of the driven ingredients 136 that projects into the mixing bowl. The bluff face 112 presented by the thick edge extends into the bowl a distance h, which is between about 20mm and 5mm, preferably between about 7mm and 12 mm, and more preferably about 9mm.The bluff face 112 forms an angle *α* with the edge of the mixing bowl of between about 50 and 140 degrees, preferable between about 70 and 110 degrees, and more preferably about 90 degrees.

In the embodiment shown, the trailing face of the elongate blade 102 is provided by the streamlined face 116 of the elongate blade 102. The streamlined face 116 forms an angle *β* with the edge of the mixing bowl at the thin elongate edge of less than about 45 degrees, preferable between about 5 and 30 degrees, and more preferably between about 5 and 10 degrees.

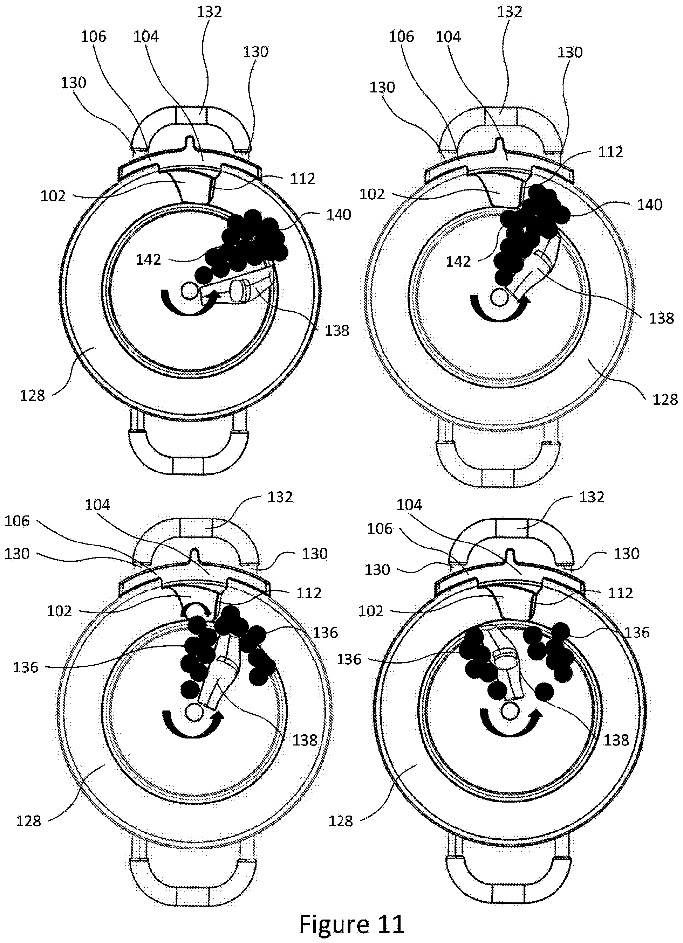

Figure 11 illustrates a step-by-step example of the detachable rib in use. The elongate blade 102 of the detachable rib provides an obstacle to the path of the outer ingredients 140 that build up at the outer edge of the stir tool 138 blade. The elongate blade 102 acts to interrupt the motion of the outer ingredients 140 and 'pinches' them in co-operation with the stir tool 138 into two portions of ingredients 140 and 142, causing at least a portion of them to be forced over the trailing edge of the stir tool 138 blade. The inner ingredients 142 that have not yet been forced to the edge of the bowl tumble over the back of the trailing face of the elongate blade 102. In the embodiment shown in figures 1 to 3 it is the bluff face 112 of the elongate blade 102 that provides the obstacle. Ingredients 140 being pushed around the outer edge of the mixing bowl are prevented from continuing to be driven around the mixing bowl 128 by the bluff face 112 and fall into the middle of the mixing bowl 128, turning over as they do so, once stir tool 138 has passed the bluff face 112. The streamlined face provides the trailing edge over which the inner ingredients 142 tumble. As the stir tool 138 drives the inner ingredients 142 remaining on the stir tool blade in rotational motion some of the ingredients are pushed outward by the centrifugal force of the rotation, and build up at the edge of the mixing bowl, becoming a new set of outer ingredients 142.

The elongate body comprising the elongate blade 102 of the detachable rib has a length such that in use the stir tool 138 blade can pass underneath it uninhibited. For example it may have a length such that a clearance of between 10mm and 20mm if formed between the elongate blade 102 and an element of the stir tool 138 in contact with the bottom of the mixing bowl 128 (e.g., a scrapping element). Alternatively, the stir tool 138 may be formed with a flexible element along its outside edge that wipes across the elongate blade 102 as it rotates, thus eliminating the gap separating the elongate blade and the stir tool 138. The rounded bottom 120 of the elongate blade 102 acts to encourage the downward motion of ingredients 136 around the bottom 120, thus enhancing mixing and acting to prevent the furthermost edge from the clip arrangement trapping food. The blade 102 may also be shaped such that it conforms to the shape of the stir tool 138, maintaining a substantially even clearance from the stir tool 138.

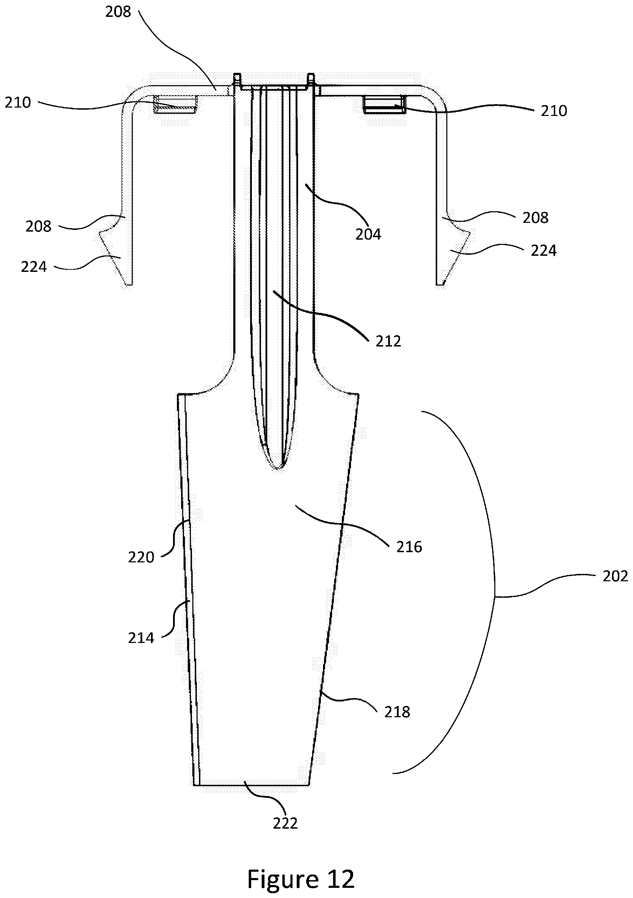

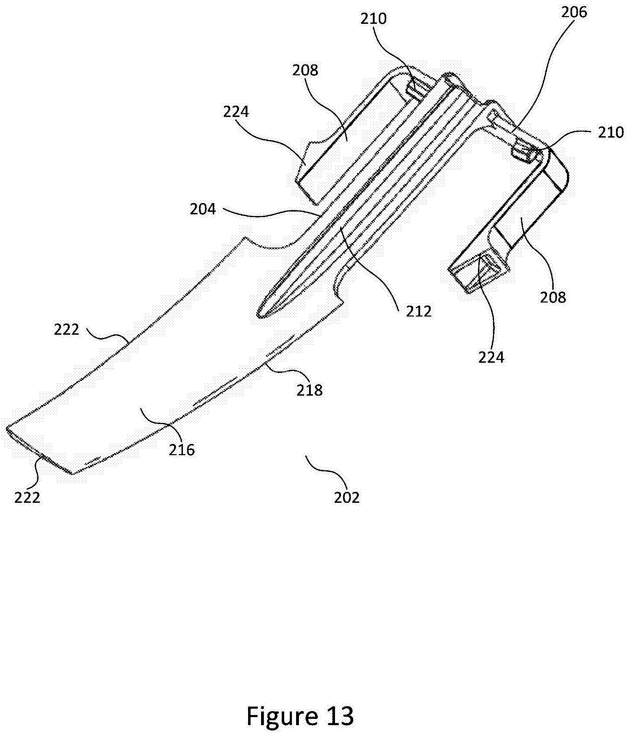

A further embodiment of the detachable rib is shown in figures 12 and 13. In this embodiment, an elongate body comprising an elongate blade 202 descends from a connecting strip 204. The connecting strip connects the elongate blade to a clip support 206, from which two clips descend 208 at either end of the clip support 206. Two securing tabs 210 also descend from the clip support 206.

The connecting strip 204 extends from the top of the clip support 206 before curving downwards, such that it will enter a mixing bowl when in use. The connecting strip 204 joins the top of the elongate blade 202 smoothly. An elongate reinforcing member 212, in this case a column, extends along the central axis of the connecting strip 204 and partially along the elongate blade 202.

The elongate blade comprises a bluff face 214 presented by a thick edge and a shallow streamlined face 216. The shallow streamlined face 216 extends from a thin elongate edge 218 of the elongate blade to the thick edge, where it joins the bluff face 214. The thin elongate edge 218 can be at an angle to the axis along the centre of the connecting strip, for example as shown in the embodiments in Figures 12 and 13, but alternatively can be parallel to that axis. The elongate blade 202 is curved along its length, so as to lie closely adjacent to an inner surface of a mixing bowl when in use, and terminates in a straight edge 222 at the distal end of the elongate blade 202 from the connecting strip 204.

The clips 208 extend downwards from either end of the clip support 206, and in the embodiment shown are integrally formed with the clip support 206. The clips 208 are formed from a sprung material such that they are urged to return to the position shown in Figures 12 and 13 relative to the clip support 206 (i.e. perpendicular to the clip support 206). The end of each the clips 208 comprises a hooked head 224 for engaging with a handle of a mixing bowl. The face of each hooked head 224 nearest the clip support 206 is curved in a direction away from the other clip to form a partial hook shape. The rest of each hooked head comprises a wedge. The clips 208 form an attachment formation for engaging with a corresponding formation on a mixing bowl, which in this embodiment is the mixing bowl handle.

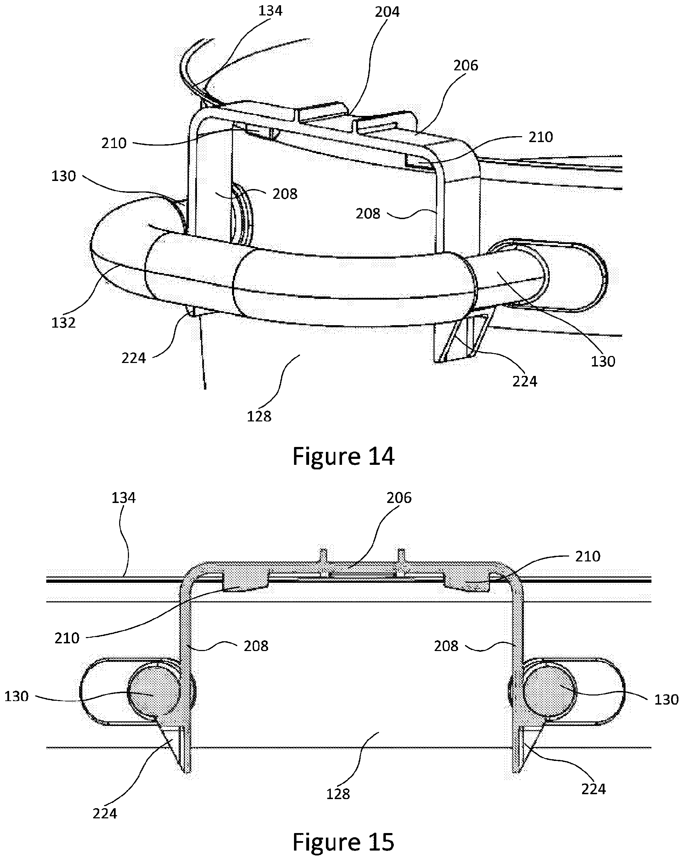

Figures 14 and 15 illustrate the further embodiment of the detachable rib attached to a handle of a mixing bowl. The clips 208 secure the detachable rib against the legs 130 of the mixing bowl handle 132 by means of the sprung nature of the clips 208. This secures the detachable rib against circumferential movement around the mixing bowl 128 in two rotational directions around the mixing bowl. The curved face of the hooked head 224 of each of the clips 208 extends around at least a portion of the underside of the legs 130 of the mixing bowl handle 132 to prevent upward vertical motion of the detachable rib relative to the mixing bowl 128. The securing tabs 210 that descend from the clip support 206 secure the detachable rib to the rim 134 of the mixing bowl 128, preventing downward vertical motion of the detachable rib relative to the mixing bowl 128.

The detachable rib is secured to the mixing bowl 128 by first placing the elongate blade 102 into the mixing bowl 128 such that the clip support 204 and clips 208 remain on the outside, and the wedges of the hooked heads 224 of the clips 208 each rest on one of the legs 130 of the mixing bowl handle 132. Applying a downward force to the top of the clip support 206 causes the clips 208 to flex toward each other due to the resulting force applied to each of the wedges of the hooked heads 224 by the legs 130 of the mixing bowl handle 132. Once the wedges have passed the legs 130 of the mixing bowl handle 132, the sprung nature of the clips 208 returns the clips 208 to their original position relative to the clip support 206. In doing so, the curved face of the hooked heads 224 of each clip 208 secure the detachable rib against the legs 130 of the mixing bowl handle 132. The clip support 206 is prevented from being pushed further downwards by the securing tabs 210.

Arranging the clips in this way secures the detachable rib against rotational motion in both circumferential directions within the mixing bowl 128, as each clip acts against one of the legs 130 of the mixing bowl handle 132 to provide a force resisting forces applied in that direction. In this way, the detachable rib can be used with a mixing tool that rotates in either direction within the mixing bowl.

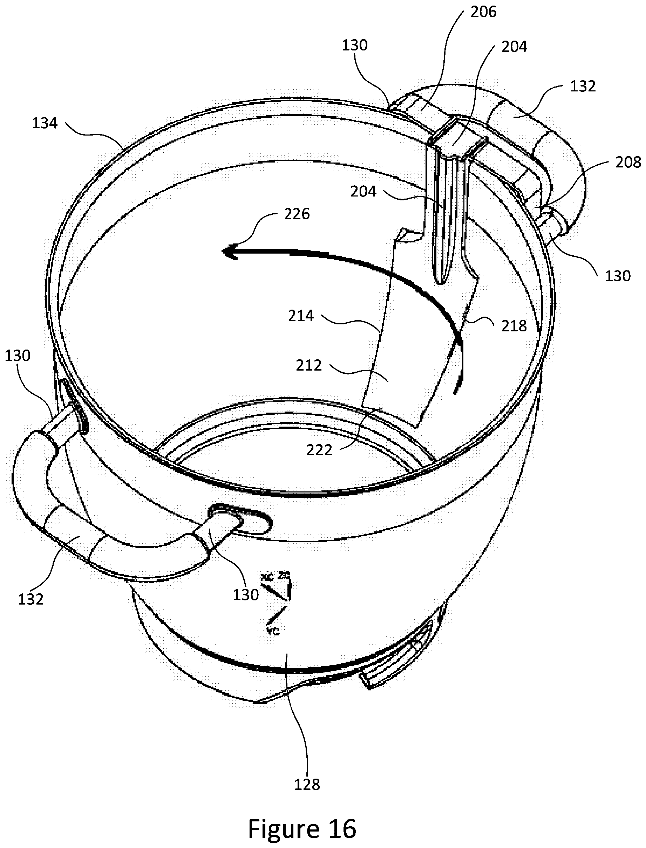

Figure 16 illustrates the further embodiment of the detachable rib in use within a mixing bowl. The direction of motion of a mixing tool within the bowl is shown by the arrow 226, though in this embodiment it could alternatively be in the other direction. In the embodiment shown the shallow streamlined face 212 is presented to ingredients being driven around the bowl by a mixing tool. The shallow streamlined face 212 forces ingredients being pushed around the inner circumference of the mixing bowl 128 inwards into the mixing bowl, away from the inner bowl surface. When the ingredients are urged over the thick edge 214 of the elongate blade, they can tumble over the bluff face of the elongate blade. This can lead to enhanced mixing of the ingredients.

The clips 208 secured against the legs 130 of the mixing bowl handle 132 prevent the force of the ingredients being pushed against the elongate blade by the mixing tool from causing the detachable rib to pushed around the inside of the mixing bowl 128.

The elongate blade does not extend to the base of the mixing bowl, but terminates in the straight edge 222 a height above the base of the mixing bowl sufficient to allow passage of the mixing tool underneath the elongate rib.

The ingredients can alternatively be driven in rotational motion in the opposite direction to that shown in Figure 16, in which case the bluff face formed by the thick elongate edge of the elongate blade is presented to the ingredients and the detachable rib acts as described in relation to Figures 10 and 11. The double clip arrangement of the embodiment shown in Figures 11 to 16 allows for either direction to be used.

In the embodiments shown in Figures 1 to 16, the detachable rib is arranged to be attached to a mixing bowl by means of clips which attach to the handle of the mixing bowl. However, the use of other attachment formations on the detachable rib is possible. For example, a clamp on the detachable rib can be used as the attachment formation instead of the clips. Alternatively, the attachment formation can be a screw on the detachable rib that engages with a threaded hole in the mixing bowl handle, or vice versa. A further example is to have magnets acting as both the attachment formation on the detachable rib and the corresponding formation on the mixing bowl handle. Many other examples are possible.

At least the parts of the detachable rib expected to come into contact with food can be formed of a food safe material, such as fibreglass, nylon, injection moulded plastic or stainless steel. The whole detachable rib can be integrally formed, or formed from different sections, which may comprise different materials. For example, the elongate blade can be formed from stainless steel, while the clips are formed from plastic. Preferably, the detachable rib is formed from heat resistant material to allow for the use of the detachable rib in a heated mixing bowl.

The detachable rib can also include a communication element to inform a kitchen appliance of the presence of the detachable rib within the bowl. This can be, for example, a RFID tag or NFC tag in the detachable rib that communicates with a sensor in the mixing bowl or kitchen appliance, or a magnetic element in the detachable rib that triggers a reed switch on the mixing bowl. The presence of the detachable rib can thereby be detected by the kitchen appliance, and displayed to a user via a user interface on the kitchen appliance. Tools for use in the kitchen appliance that work with the detachable rib may also have such communication means, and can indicate to the kitchen appliance the need for the user to attach the detachable rib to the mixing bowl. Tools that are incompatible with the detachable rib may also have such communication means, and indicate to a user the need to remove the detachable rib, if present, before using the kitchen appliance with that tool. The kitchen appliance may further be arranged to configure itself to operate in a particular mode and/or at a particular speed on detection of the detachable rib.

Multiple detachable ribs may be provided in a kit. These ribs may be of differing dimensions (e.g., they may extend into the bowl by differing thicknesses) and shapes so as to cater for differing ingredients, and have differing chirality so as to present bluff faces in differing directions.

Whilst a detachable rib is shown in Figures 1 to 16, the advantageous shape of the detachable rib shown in Figures 1 to 16 may also be used in one or more ribs that are integrally formed with the bowl. These ribs may be formed so as to be symmetrically spaced about the inside of the bowl so as to balance it, and may, where two or more ribs are used, be formed with bluff faces facing in differing directions (e.g., one rib may have a bluff face facing clockwise and another may have a bluff face facing anti-clockwise) to enable the use of a reversible motor (i.e., a motor that may selectively drive a mixing/cutting/blending tool to rotate either clockwise or anticlockwise) with the bowl. Whilst a mixing bowl is described here, any chamber or cavity in which food mixing or processing is to take place (including, for example, the bell of a hand-blender or a blender goblet) may have such ribs formed within it.

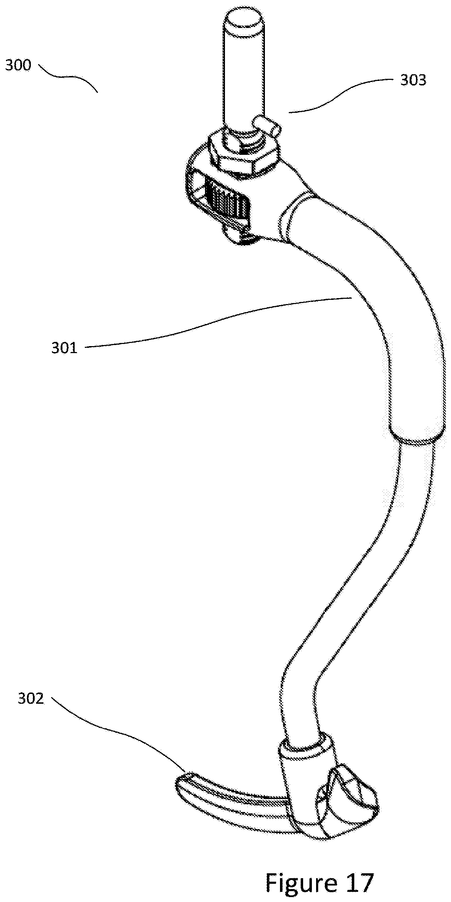

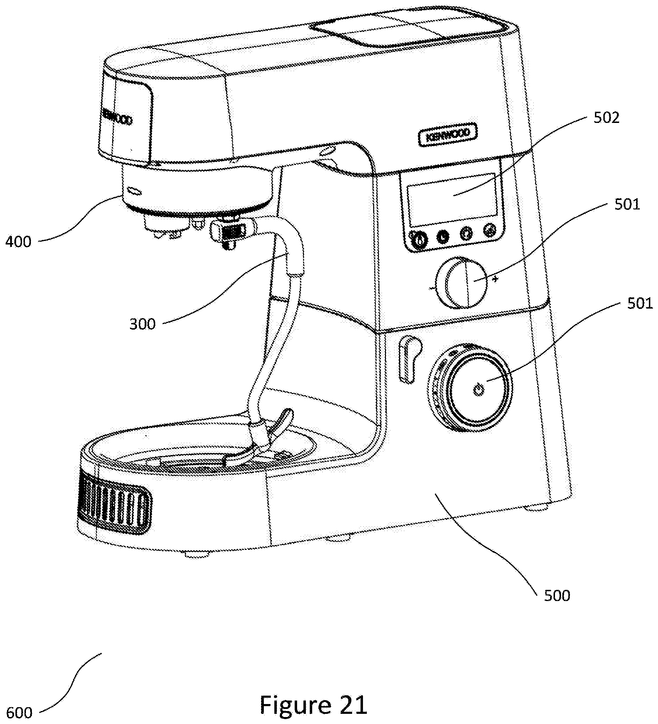

An exemplary stir tool 300 which may be used in combination with the detachable rib is shown in Figs. 17-19. Stir tool 300 has an elongate S or C-shaped curved upper body 301 that attaches to the food processing machine with which it is used (e.g., a stand mixer such as that shown in Fig. 21) at its upper end via the attachment mechanism 303, and to a stirring foot 302 that scrapes the container with which it is used at its lower end. The upper body and foot form a first member. The attachment mechanism forms a second member, which is relatively moveable in relation to the first member by an adjustment mechanism. The upper body 301 and attachment mechanism 303 can be made of a relatively rigid material such as stainless steel, with the upper body 301 either partly or wholly over-moulded with a heat-resistant plastic to facilitate handling after heating. The foot 302 can be made of a relatively durable and heat-resistant material, such as a plastic such as a polyetherimide (e.g., Ultem^{™}) for withstanding heats of 180-200 °C without significant deformation.

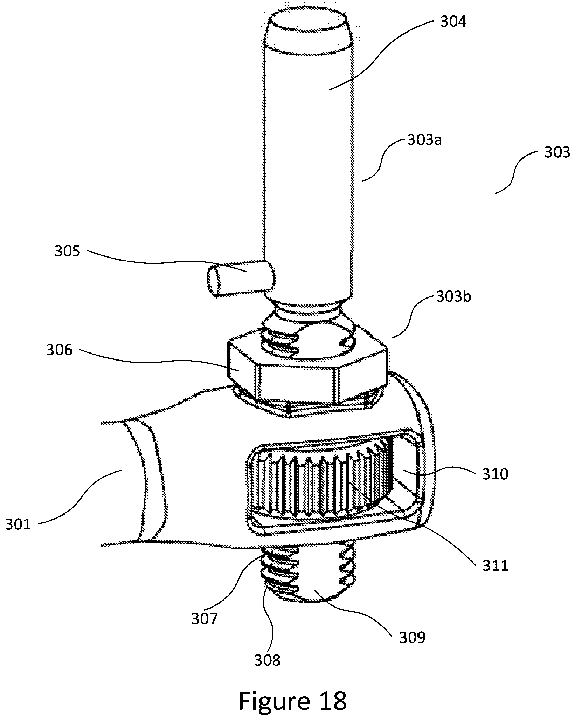

Detail of the attachment mechanism 303 can be seen in Fig. 18. At its upper end the attachment mechanism 303 has a connector 303a that is connectable to a food processing machine via a cylinder-shaped spigot 304 and locating pin 305 extending radially from the spigot 304 that locks into a corresponding socket in the food processing machine in bayonet-and-socket fashion so as to depend downwardly from the food processing machine and receive drive from it. Whilst a bayonet fitting is used here as an example, other fittings may be used, including snap-fittings and screw-fittings.

The lower end of the spigot 304 is connected to a height adjustment mechanism 303b. The height adjustment mechanism 303b has a cylinder-shaped threaded element 307 extending co-axially from the spigot 304. The threaded element 307 extends through a vertical through-hole 312 defined vertically (i.e., in the primary direction of extension of the stir tool 300 as a whole) through the upper body 301 at a point where the curve of upper body 301 is such that it extends horizontally at an approximate right-angle to the threaded element 307. The threaded element 307 is preferably dimensioned such that, when located in the vertical through-hole 312, it can extend both above and below the vertical through-hole 312 to permit upward and downward movement.

The threaded element 307 has, at different points on its surface, threaded sections 308 having screw-thread, and flat sections 309 without screw-thread. In this example the threaded sections 308 are located on opposite sides of the threaded element 307, and the flat sections 309 are also located on opposite sides of the threaded element 307.

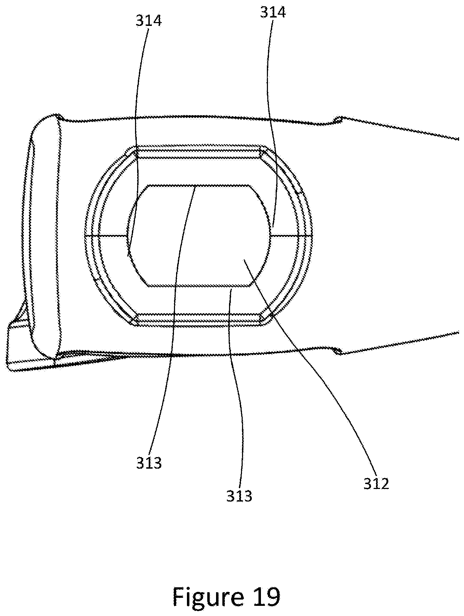

As can be seen in Fig. 19, the vertical through-hole 312 has arcuate wall-sections 314 and straight wall-sections 313. The arcuate wall-sections 314 extend at right-angles to the direction of extension of the upper body 301, and the straight wall-sections 313 extend parallel to the direction of extension of the upper body 301. The vertical through-hole 312 is dimensioned such that when the threaded element 307 is located within the vertical through-hole 307, the flat wall-sections 313 closely abut the flat section 309 thus preventing rotation of the threaded element 307 within the vertical through-hole 312. Particularly when the stir tool 300 is driven in circular fashion, it is desirable that its orientation of the tool 300 relative to the container does not change whilst height is adjusted as this may impact the contact between the scraping foot 302 and the base of the container.

A horizontal through-hole 310 is defined horizontally through the upper body 301 at the same axial location as the vertical through-hole 312. The horizontal through-hole 310 is defined through the upper body 301 such that it extends at right angles both to the downwardly-depending threaded element 307 and to the horizontally-extending upper body 301, and crosses the vertical through-hole 312 at a right angle.

An annular adjustment wheel 311 is located within the horizontal through-hole 310 so as to be concentric with the vertical through-hole 312 and dimensioned so as to accommodate the insertion of the threaded element 307 through its central hole. The inside surface of the adjustment wheel 311 has screw-thread matching and engaging with the screw-thread of the threaded sections 308 such that, when the adjustment wheel 311 is rotated, the adjustment wheel 311 moves axially along the threaded element 307 to any desired position along the threaded element 307. The outside surface of the adjustment wheel 311 is roughened so at to facilitate gripping by the user during turning, and is accessible to the user through the horizontal through-hole 310.

Since the threaded element 307 cannot rotate relative to the vertical through-hole 312 movement of the adjustment wheel 311 along the threaded element 307 results in the upper body 301 and the foot 302 also moving axially along the threaded element 307 so as to allow the raising/lowering of the foot 302 to adapt to different containers without changing the orientation of the tool 300. This ensures proper scraping of the bottom of different containers by the foot 302 regardless of the container used.

A locking nut 306 having a thread which engages with the thread of the threaded sections 308 is located on the threaded element 307 either above or below the vertical through-hole 312. When it is desired to lock the threaded element 307 in place, the locking nut is rotated until it applies pressure to the upper body 301, which in turn applies pressure to the adjustment wheel 311, preventing it from being turned. When it is desired to raise or lower the foot 302, the locking nut 306 can be rotated so as to loosen it. Whilst a locking nut is shown here for exemplary purposes, other locking elements may be used, including pegs or clamps which attach/grip the adjustment wheel 311 to prevent its rotation.

Particularly (but not exclusively) where soft materials are to be processed, to further enhance the contact between the foot 302 and the container with which it is being used, the upper body 301 may be made of a resilient material such as, for example, a resilient polymer, or spring steel. Additionally or alternatively either the socket on the food processor or the spigot 304 may be spring-loaded by a resilient element such as a helical spring so as to push the foot more firmly against a bottom of the container.

However, it may be that where hard, possibly burnt-on material is to be scraped away a rigid construction is desired as this will not yield or move upwardly when coming into contact with hard material. In this case resilient elements may be omitted and the upper body 301 can be made of a stiff material such as a stiff polymer or metal such as stainless steel.

Whilst a primarily vertically-extending stir tool 300 has been shown here for exemplary purposes, the stir tool may instead extend in a primarily horizontal direction so as to contact a side-wall of the container. In this case the height adjustment mechanism 303b would instead be arranged horizontally so as to vary the radial extension of the foot 302 away from the drive to which it attaches to adjust for differently-sized containers. Indeed, two adjustment mechanisms may be provided, one to vary the horizontal extension of the tool, and the other to vary the vertical extension of the tool.

Whilst the connector 303a and the height adjustment mechanism 303b are shown as being located adjacent each other at the top of the stir tool 300 so as to avoid food ingress into the height adjustment mechanism 303b impairing its performance, the height adjustment mechanism may be located anywhere along the upper body 301.

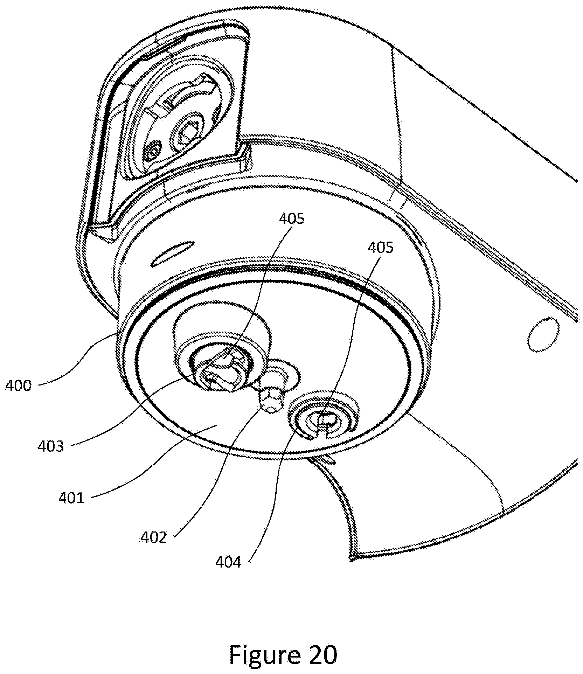

Fig. 20 shows an exemplary drive outlet 400 to which the stir tool 300 may be attached. The drive outlet 400 has two sockets to which the stir tool 300 may be attached - a planetary-drive outlet 403 and a circular-drive outlet 404, each of which has locating holes 405 into which the locating pin 305 of a tool may be fitted. Both drive outlets 403 and 404 depend from a circular driving plate 401 that is driven to rotate about its central axle 402. Whilst circular-drive outlet 404 is fixed relative to the circular driving plate 401, and therefore only rotates about central axle 402 when the circular driving plate 401 rotates, planetary-drive outlet 403 also rotates about its own central axis at the same time as it rotates about central axle 402.

Fig. 21 shows the stir tool in attachment with the circular drive-outlet 402 of the drive outlet 400 of a food processing appliance 600 (in this case a C-shaped stand-mixer). The drive outlet 400 is supported by the base 500, which includes control knobs 501 for controlling the speed of rotation of the stir tool 300, and a user interface 502 for receiving and displaying information and instructions to users. A motor for driving the drive outlet may be located in the base 500, and the base 500 may also have an integral heating or cooling means (e.g., an induction heater) for heating any containers attached to the base 500.

Whilst the adjustment wheel 310 has been described as being turned manually, the adjustment wheel 310 could instead be driven by an electric motor. In this case the outside surface of the adjustment wheel 310 would instead have teeth that would interface with a gear driven by an electric motor located either on the stir tool 300 or within the food processing appliance. Where the electric motor is located on the stir tool 300 the stir tool 300 may further include electric contacts to pick up electrical power for the motor from the food processing appliance 600, or have an integral battery for powering the motor. Where the motor is located within the food processing appliance 600, a drive-shaft may depend downwardly from the drive outlet 400 to drive the adjustment wheel 310. The motor may be controlled by a CPU located within the food processing appliance 600 according to user instructions inputted into the user interface 600, and/or according to signals received by the CPU from a sensor that detects a tag (e.g., an RFID tag) of a container attached to the container identifying the desired extension distance of the stir tool 300.

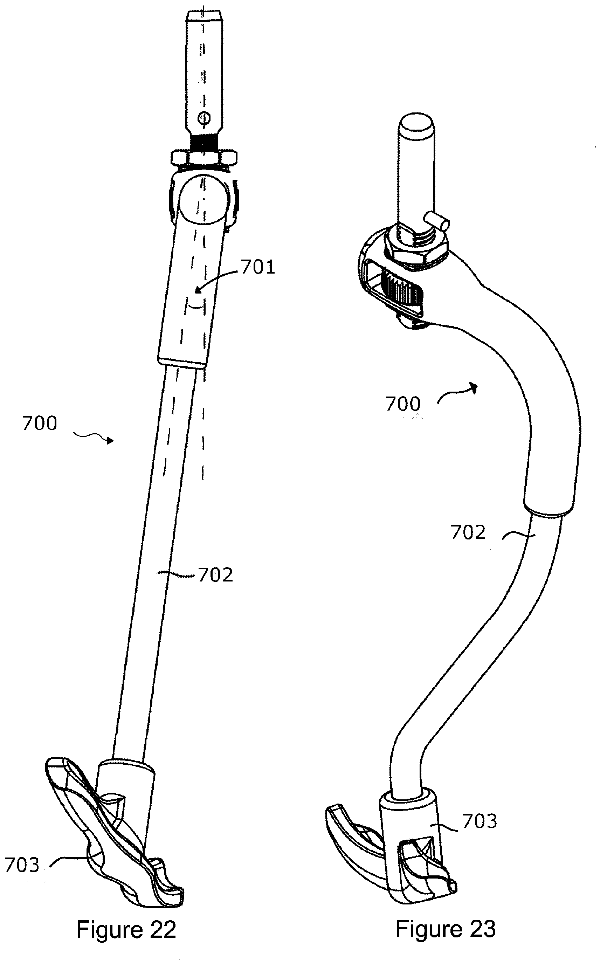

Referring now to Figures 22 and 23, in another embodiment the stir tool 700 is similar in shape to the stir tool 300 shown in Figure 17, but bends or is inclined backwardly slightly at a small angle 701 (in this example by about 7 degrees) away from the direction of rotation, in a direction from the connector towards the foot. This may assist in driving material being stirred downwardly in the bowl, since the face of the body 702 and foot 703 which contact the food are thus angled slightly downwardly. This is to reduce the tendency for the material being processed to be propelled out of the bowl.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances.

The invention described here may be used in any kitchen appliance and/or as a stand-alone device. This includes any domestic food-processing and/or preparation machine, including both top-driven machines (e.g., stand-mixers) and bottom-driven machines (e.g., food processors). It may be implemented in heated and/or cooled machines. The invention may also be implemented in both handheld (e.g., hand blenders) and table-top (e.g., blenders) machines. It may be used in a machine that is built-in to a work-top or work surface, or in a stand-alone device. The invention can also be implemented as a stand-alone device, whether motor-driven or manually powered.

## Claims

1. A mixing bowl (128) for food having an integral handle and a detachable rib (100), the rib comprising;
an elongate body portion comprising a blade (102) configured to extend into the mixing bowl along or adjacent an inner surface thereof; and
at least one attachment formation (108) for engaging with a corresponding formation (130) of the mixing bowl, the engagement securing the rib against movement in at least one rotational direction;
such that in use the blade is arranged to interrupt a path of food (140) being driven around the mixing bowl in the at least one rotational direction, **characterised in that** the at least one attachment formation is arranged to engage with the handle (132) of the mixing bowl.

2. A mixing bowl according to claim 1, wherein the blade extends in a substantially axial direction along an inner surface of the mixing bowl.

3. A mixing bowl according to any preceding claim, wherein the at least one attachment formation is arranged to secure the rib against movement in both rotational directions.

4. A mixing bowl according to any preceding claim, wherein the at least one attachment formation is provided at one end of the blade, and is arranged to engage with the corresponding formation at or adjacent a rim (134) of the mixing bowl,
preferably wherein the blade is connected to the at least one attachment formation by a connecting element (104) arranged to extend over the rim of the bowl.

5. A mixing bowl according to any preceding claim, wherein the at least one attachment formation comprises a pair of clips, each of which is suitable for being secured against a leg of the handle of the mixing bowl.

6. A mixing bowl according to any preceding claim, wherein the at least one attachment formation comprises or is arranged to engage with at least one of: a clamp; a screw; a fixing post; and a magnet.

7. A mixing bowl according to any preceding claim, wherein a first elongate edge (112) of the blade comprises a thicker edge than a second elongate edge (118), so as to present a bluff face, preferably
wherein the bluff face is shaped to protrude into the mixing bowl a distance of between 3mm and 15mm, preferably between 7mm and 11mm, more preferably 9mm, when engaged with the mixing bowl, and/or wherein the bluff face is arranged to be angled between 50 and 130 degrees, preferably 90 degrees, to the surface of the mixing bowl when engaged with the mixing bowl, and/or wherein the bluff face of the rib has a curved profile at a lower end thereof, and/or wherein the blade further comprises a streamlined face (116) extending from the second elongate edge which is thinner than the first elongate edge, preferably wherein the streamlined face is curved, and/or
wherein the streamlined face is arranged the angled at an angle of less than 45 degrees, preferably between 5 and 30 degrees, to the surface of the mixing bowl when engaged with the mixing bowl.

8. A mixing bowl according to any preceding claim, wherein the blade comprises a flexible seal, arranged so as to form a seal between the blade and the mixing bowl when the rib is engaged with the mixing bowl.

9. A mixing bowl according to any preceding claim, wherein the blade is manufactured from a food safe material, preferably wherein the food safe material comprises at least one of: fibreglass; nylon; injection-moulded plastic; or stainless steel, and/orwherein the blade comprises a heat resistant material, and/or wherein the detachable rib further comprises an elongate reinforcing member (212).

10. A mixing bowl according to any preceding claim, wherein the blade is shaped to conform to the shape of a mixing tool for use in the mixing so as to maintain a substantially constant clearance from the mixing tool along its length.

## Patentansprüche

1. Mischbecher (128) für Lebensmittel, der einen integrierten Griff und eine abnehmbare Rippe (100) aufweist, wobei die Rippe Folgendes umfasst:
einen länglichen Körperabschnitt, der eine Klinge (102) umfasst, die so konfiguriert ist, dass sie sich in den Mischbecher entlang oder angrenzend an eine Innenfläche derselben erstreckt; und
mindestens eine Befestigungsanordnung (108) zum Eingreifen in eine entsprechende Anordnung (130) des Mischbechers, wobei der Eingriff die Rippe gegen eine Bewegung in mindestens einer Drehrichtung sichert;
so dass im Gebrauch die Klinge dafür ausgelegt ist, einen Pfad von Lebensmitteln (140) zu unterbrechen, die in der mindestens einen Drehrichtung in dem Mischbecher herumgetrieben werden, **dadurch gekennzeichnet, dass** die mindestens eine Befestigungsanordnung dafür ausgelegt ist, mit dem Griff (132) des Mischbechers in Eingriff zu kommen.

2. Mischbecher nach Anspruch 1, wobei sich die Klinge in einer im Wesentlichen axialen Richtung entlang einer Innenfläche der Mischbecher erstreckt.

3. Mischbecher nach einem der vorhergehenden Ansprüche, wobei die mindestens eine Befestigungsanordnung so ausgelegt ist, dass sie die Rippe gegen Bewegung in beide Drehrichtungen sichert.

4. Mischbecher nach einem der vorhergehenden Ansprüche, wobei die mindestens eine Befestigungsanordnung an einem Ende der Klinge vorgesehen und so ausgelegt ist, dass sie mit der entsprechenden Anordnung an oder neben einem Rand (134) des Mischbechers in Eingriff kommt,
wobei die Klinge vorzugsweise durch ein Verbindungselement (104), das so ausgelegt ist, dass es sich über den Rand der Schüssel erstreckt, mit der mindestens einen Befestigungsanordnung verbunden ist.

5. Mischbecher nach einem der vorhergehenden Ansprüche, wobei die mindestens eine Befestigungsanordnung ein Paar von Klammern umfasst, von denen jede geeignet ist, an einem Schenkel des Griffs des Mischbechers befestigt zu werden.

6. Mischbecher nach einem der vorhergehenden Ansprüche, wobei die mindestens eine Befestigungsanordnung mindestens eines der folgenden Elemente umfasst oder so ausgelegt ist, dass sie mit mindestens einem der folgenden Elemente in Eingriff gebracht werden kann: eine Klammer, eine Schraube, ein Befestigungspfosten und ein Magnet.

7. Mischbecher nach einem der vorhergehenden Ansprüche, wobei eine erste längliche Kante (112) der Klinge eine dickere Kante als eine zweite längliche Kante (118) umfasst, so dass sie eine schräge Fläche aufweist, vorzugsweise
wobei die Riffelfläche so geformt ist, dass sie in den Mischbecher um einen Abstand zwischen 3 mm und 15 mm, vorzugsweise zwischen 7 mm und 11 mm, besonders bevorzugt 9 mm, hineinragt, wenn sie mit dem Mischbecher in Eingriff steht, und/oder wobei die Riffelfläche so ausgelegt ist, dass sie zwischen 50 und 130 Grad, vorzugsweise 90 Grad, zur Oberfläche des Mischbechers abgewinkelt ist, wenn sie mit dem Mischbecher in Eingriff steht, und/oder wobei die Riffelfläche der Rippe ein gekrümmtes Profil an ihrem unteren Ende aufweist, und/oder wobei die Klinge ferner eine stromlinienförmige Fläche (116) umfasst, die sich von der zweiten länglichen Kante erstreckt, die dünner ist als die erste längliche Kante, wobei die stromlinienförmige Fläche vorzugsweise gekrümmt ist, und/oder
wobei die stromlinienförmige Fläche dafür ausgelegt ist, in einem Winkel von weniger als 45 Grad, vorzugsweise zwischen 5 und 30 Grad, zur Oberfläche des Mischbechers abgewinkelt zu werden, wenn sie mit dem Mischbecher in Eingriff steht.

8. Mischbecher nach einem der vorhergehenden Ansprüche, wobei die Klinge eine flexible Dichtung umfasst, die so ausgelegt ist, dass sie eine Dichtung zwischen der Klinge und dem Mischbecher bildet, wenn die Rippe mit dem Mischbecher in Eingriff ist.

9. Mischbecher nach einem der vorhergehenden Ansprüche, wobei die Klinge aus einem lebensmittelechten Material hergestellt ist, wobei das lebensmittelechte Material mindestens eines der Folgenden umfasst: Glasfaser, Nylon, spritzgegossener Kunststoff oder rostfreier Stahl, und/oder wobei die Klinge ein hitzebeständiges Material umfasst, und/oder wobei die abnehmbare Rippe ferner ein längliches Verstärkungselement (212) umfasst.

10. Mischbecher nach einem der vorhergehenden Ansprüche, wobei die Klinge so geformt ist, dass sie der Form eines Mischwerkzeugs zur Verwendung beim Mischen entspricht, so dass ein im Wesentlichen konstanter Abstand zu dem Mischwerkzeug entlang seiner Länge beibehalten wird.

## Revendications

1. Bol mélangeur (128) pour des aliments ayant une poignée d'un seul tenant et une nervure amovible (100), la nervure comprenant ;
une portion corps allongée comprenant une lame (102) configurée pour s'étendre dans le bol mélangeur le long de, ou de manière adjacente à, une surface interne de celui-ci ; et
au moins une formation d'attache (108) pour se mettre en prise avec une formation correspondante (130) du bol mélangeur, la mise en prise assujettissant la nervure contre un mouvement dans au moins une direction de rotation ;
de telle sorte qu'en utilisation la lame est agencée de façon à interrompre un trajet des aliments (140) qui sont entraînés autour du bol mélangeur dans l'au moins une direction de rotation, **caractérisé en ce que**
l'au moins une formation d'attache est agencée de façon à se mettre en prise avec la poignée (132) du bol mélangeur.

2. Bol mélangeur selon la revendication 1, dans lequel la lame s'étend suivant une direction substantiellement axiale le long d'une surface interne du bol mélangeur.

3. Bol mélangeur selon n'importe quelle revendication précédente, dans lequel l'au moins une formation d'attache est agencée de façon à assujettir la nervure contre un mouvement dans les deux directions de rotation.

4. Bol mélangeur selon n'importe quelle revendication précédente, dans lequel l'au moins une formation d'attache est prévue au niveau d'une extrémité de la lame, et est agencée de façon à se mettre en prise avec la formation correspondante au niveau de, ou en position adjacente à, un rebord (134) du bol mélangeur,
de préférence dans lequel la lame est raccordée à l'au moins une formation d'attache par un élément de raccordement (104) agencé de façon à s'étendre par-dessus le rebord du bol.

5. Bol mélangeur selon n'importe quelle revendication précédente, dans lequel l'au moins une formation d'attache comprend une paire de clips, dont chacun convient à être assujetti contre une patte de la poignée du bol mélangeur.

6. Bol mélangeur selon n'importe quelle revendication précédente, dans lequel l'au moins une formation d'attache comprend ou est agencée de façon à se mettre en prise avec au moins un élément parmi : une pince ; une vis ; un montant de fixation ; et un aimant.

7. Bol mélangeur selon n'importe quelle revendication précédente, dans lequel un premier bord allongé (112) de la lame comprend un bord plus épais qu'un deuxième bord allongé (118), de sorte à présenter une face abrupte, de préférence
dans lequel la face abrupte est façonnée pour faire saillie dans le bol mélangeur sur une distance d'entre 3 mm et 15 mm, de préférence entre 7 mm et 11 mm, de plus grande préférence de 9 mm, lorsqu'elle est en prise avec le bol mélangeur, et/ou dans lequel la face abrupte est agencée de façon à être inclinée entre 50 et 130 degrés, de préférence de 90 degrés, vers la surface du bol mélangeur lorsqu'elle est en prise avec le bol mélangeur, et/ou dans lequel la face abrupte de la nervure a un profil incurvé à une extrémité inférieure de celle-ci, et/ou dans lequel la lame comprend en outre une face profilée (116) s'étendant à partir du deuxième bord allongé qui est plus mince que le premier bord allongé, de préférence dans lequel la face profilée est incurvée, et/ou
dans lequel la face profilée est agencée de façon à être inclinée à un angle de moins de 45 degrés, de préférence entre 5 et 30 degrés, vers la surface du bol mélangeur lorsqu'elle est en prise avec le bol mélangeur.

8. Bol mélangeur selon n'importe quelle revendication précédente, dans lequel la lame comprend un joint souple, agencé de sorte à former un joint entre la lame et le bol mélangeur lorsque la nervure est en prise avec le bol mélangeur.

9. Bol mélangeur selon n'importe quelle revendication précédente, dans lequel la lame est fabriquée à partir d'une matière non nocive pour les aliments, de préférence dans lequel la matière non nocive pour les aliments comprend au moins une matière parmi : fibre de verre ; nylon ; plastique moulé par injection ; ou acier inoxydable, et/ou dans lequel la lame comprend une matière résistant à la chaleur, et/ou dans lequel la nervure amovible comprend en outre un élément de renforcement allongé (212).

10. Bol mélangeur selon n'importe quelle revendication précédente, dans lequel la lame est façonnée pour s'adapter à la forme d'un outil de mélangeage pour une utilisation lors du mélangeage de sorte à maintenir un dégagement substantiellement constant par rapport à l'outil de mélangeage le long de sa longueur.
